# DEMANDE DE BREVET EUROPEEN

(11) **EP 4 738 387 A1**
(43) Date de publication de la demande: **06.05.2026**
(21) Numéro de dépôt: 25213473.9
(22) Date de dépôt: 04.11.2025
(51) Int. Cl.: H01B 3/28, C08L 23/12, H01B 3/44, H01B 13/14, H01B 9/00

(54) **COUCHE ISOLANTE THERMOPLASTIQUE FLEXIBLE POUR CÂBLE ÉLECTRIQUE**

(30) Priorité: 04.11.2024 FR 2412044
(71) Demandeur: Nexans, 92400 Courbevoie (FR)
(72) Inventeur: PEREGO, Gabriele, 92400 COURBEVOIE (FR); MAZEL, Christelle, 92400 COURBEVOIE (FR)
(74) Mandataire: Cabinet Boettcher

(57) **Abrégé**

La présente invention a pour objet un câble électrique (1), notamment bien adapté pour le transport d'énergie à basse tension, comprenant au moins une couche électriquement isolante (3) entourant au moins un élément électriquement conducteur allongé (2), où ladite couche isolante (3) est obtenue à partir d'une composition polymère thermoplastique comprenant un polymère de propylène homophasique ; et un copolymère d'éthylène hétérophasique, présent à hauteur de moins de 40% en poids par rapport au poids total de polymères dans la composition polymère thermoplastique.

## Description

La présente invention a trait au domaine des câbles électriques. Elle concerne plus spécifiquement celui des couches polymères électriquement isolantes présentes dans ces câbles. L'invention concerne plus précisément une couche isolante thermoplastique obtenue à partir d'une composition polymère spécifique, qui assure à la couche isolante de bonne performances électriques et mécaniques et notamment une bonne flexibilité.

L'invention s'applique typiquement, mais non exclusivement, aux câbles électriques destinés au transport d'énergie, et notamment aux câbles d'énergie à basse tension (à savoir véhiculant un courant continu ou alternatif ayant typiquement une tension inférieure ou égale à 6 kV), et qui peuvent par exemple être employés dans les domaines du transport d'électricité aérien, sous-marin, terrestre, ou encore dans l'aéronautique.

Un câble de transport d'énergie à basse tension comprend de préférence :
- un élément électriquement conducteur allongé (par exemple un fil ou un ensemble de fils toronés ensemble), notamment en cuivre ou en aluminium ;
- une couche électriquement isolante entourant ledit élément électriquement conducteur allongé ; et
- éventuellement une gaine de protection électriquement isolante entourant ladite couche électriquement isolante.

Les couches isolantes de tels câbles étaient historiquement à base de polyéthylène réticulé (XLPE) certes intéressant par certains aspects, mais qui présente notamment l'inconvénient de ne pas pouvoir être recyclé. Plus récemment, il a été proposé des couches isolantes thermoplastiques non réticulées, typiquement à base de mélanges thermoplastiques de polyéthylène et de polypropylène, qui eux présentent l'intérêt d'être recyclables.

Dans ce cadre, il a notamment été décrit dans la demande WO2022/129814 des compositions polymères thermoplastiques non réticulées bien adaptées pour la constitution de couches isolantes pour des câbles à basse tension, qui comprennent (i) au moins 50% en poids d'un polymère de propylène homophasique ; (ii) au moins un polymère d'éthylène homophasique présent en en une proportion inférieure à celle du polymère de propylène homophasique et ayant un module élastique de plus de 300 MPa et, (iii) optionellement, jusqu'à 10% en poids au maximum d'un copolymère de propylène hétérophasique. WO2022/129814 indique que, lorsqu'il est présent, le copolymère hétérophasique permet d'obtenir une meilleure compatibilité entre le polymère de propylène homophasique et le polymère d'éthylène homophasique.

Bien qu'elles soient très bien adaptées pour la constitution de couches isolantes dans des câbles à basse tension pouvant fonctionner à des températures supérieures à 70°C et qu'elles présentent de très bonnes performance thermomécaniques et électriques, les compositions de WO2022/129814 présentent néanmoins des performances moindres en termes de flexibilité.

Un but de la présente invention est de fournir des compositions polymères bien adaptées pour la constitution de couches isolantes de câbles à basse tension, et présentant notamment des performances thermomécaniques et électriques adéquates, et qui présentent en outre une meilleure flexibilité que celle des couches décrites dans la demande WO2022/129814 précitée.

A cet effet, la présente invention propose d'employer une composition polymère comprenant un mélange d'au moins un polymère de propylène et d'au moins un copolymère hétérophasique d'éthylène.

Plus précisément, la présente invention a pour objet un câble électrique comprenant au moins une couche électriquement isolante entourant au moins un élément électriquement conducteur allongé,
où ladite couche isolante est obtenue à partir d'une composition polymère thermoplastique comprenant :
- un polymère de propylène homophasique ; et
- un copolymère d'éthylène hétérophasique, présent à hauteur de moins de 40% en poids par rapport au poids total de polymères dans la composition polymère thermoplastique.

Selon un autre aspect, la présente invention a pour objet un procédé d'application d'une couche de revêtement thermoplastique autour d'au moins un élément électriquement conducteur allongé d'un câble, ledit procédé comprenant l'application, notamment par extrusion, d'une composition polymère comprenant (i) un polymère de propylène homophasique et (ii) un copolymère hétérophasique d'éthylène présent à hauteur de moins de 40% en poids par rapport au poids total de polymères dans la composition polymère thermoplastique.

Optionnellement, le câble électrique comprend au moins une couche électriquement isolante entourant au moins un élément électriquement conducteur allongé, où ladite couche isolante est obtenue à partir d'une composition polymère thermoplastique qui est un mélange comprenant :
un polymère de propylène homophasique ; et
un copolymère d'éthylène hétérophasique, présent à hauteur de moins de 40% en poids par rapport au poids total de polymères dans la composition polymère thermoplastique, le copolymère hétérophasique employé selon l'invention comprenant au moins deux phases distinctes : l'une comprenant une matrice polymère, et l'autre comprenant typiquement des particules ou nodules dispersé(e)s dans cette matrice polymère, lesdites particules ayant avec une taille moyenne en nombre allant de 200 nanomètres à 10 micromètres.

Optionnellement, le procédé d'application d'une couche de revêtement thermoplastique autour d'au moins un élément électriquement conducteur allongé d'un câble, comprend l'application, notamment par extrusion, d'une composition polymère comprenant un mélange de (i) un polymère de propylène homophasique et (ii) un copolymère hétérophasique d'éthylène présent à hauteur de moins de 40% en poids par rapport au poids total de polymères dans la composition polymère thermoplastique, le copolymère hétérophasique employé selon l'invention comprenant au moins deux phases distinctes : l'une comprenant une matrice polymère, et l'autre comprenant typiquement des particules ou nodules dispersé(e)s dans cette matrice polymère, lesdites particules ayant avec une taille moyenne en nombre allant de 200 nanomètres à 10 micromètres.

La composition polymère est typiquement issue d'un mélange de (i) un copolymère hétérophasique d'éthylène préformé ; et (ii) un copolymère homophasique de propylène. Le mélange des polymères (i) et (ii), initialement séparés, s'opère typiquement en mélangeant des premiers granulés comprenant le copolymère hétérophasique (i) avec d'autres granulés comprenant le copolymère homophasique de propylène, typiquement en amont d'une extrudeuse, le mélange s'opérant au sein de l'extrudeuse.

Dans la composition polymère thermoplastique employée selon l'invention, notamment de façon à optimiser les propriétés mécaniques de la couche isolante, le copolymère d'éthylène hétérophasique est de préférence présent à une teneur supérieure à 5%, le plus souvent au moins égale à 10%en poids par rapport au poids total de polymères dans la composition polymère thermoplastique. Cette teneur est par ailleurs inférieure à 40% en poids dans une composition utile selon l'invention, par exemple inférieure ou égale à 35%, par exemple entre 5 et 35%, par exemple entre 10 et 35%, notamment entre 15 et 35% par rapport au poids total de polymères dans la composition polymère thermoplastique.

Par ailleurs, la composition polymère thermoplastique employée selon l'invention peut typiquement comprendre le polypropylène homophasique à une teneur de 50 à 95% en poids, par exemple entre 60 et 90% en poids ou entre 65 et 85% en poids par rapport à la masse totale des polymères de la composition.

Selon un premier mode de réalisation possible, la couche isolante du câble selon l'invention est obtenue à partir d'une composition polymère thermoplastique comprenant le polymère de propylène homophasique et le copolymère hétérophasique d'éthylène à titre d'uniques polymères (ou sensiblement à titre d'uniques polymères). Selon ce premier mode de réalisation, la teneur totale en polymère de propylène homophasique et copolymère hétérophasique d'éthylène au sein de la composition (à savoir : la quantité totale de tous les polymères homophasiques de propylène plus la quantité totale de tous les copolymère hétérophasique d'éthylène au sein de la composition) est d'au moins 90% en poids, de préférence au moins 95%, voire au moins 98% en poids et plus préférentiellement au moins 99% en poids par rapport au poids total de polymères dans la composition polymère thermoplastique (la composition pouvant éventuellement contenir une très faible proportion d'un ou plusieurs autres polymères, par exemple à titre d'additifs ou d'impuretés). Selon une variante particulière, la composition polymère comprend le mélange de propylène homophasique et de copolymère hétérophasique à titre d'uniques polymères (à une teneur de 100% en poids par rapport au poids total de polymères dans la composition polymère thermoplastique, à l'exclusion de tout autre polymère dans la composition).

Alternativement, selon un autre mode de réalisation, la composition polymère thermoplastique comprend d'autres polymères que le copolymère d'éthylène hétérophasique et le polymère de propylène homophasique. Ces autres polymères sont de préférence des polymères thermoplastiques, généralement présent à hauteur de moins de 20% en poids, plus préférentiellement moins de 15% en poids par rapport au poids total des polymères de la composition.

Ainsi, selon une variante possible, la composition polymère thermoplastique employée selon l'invention peut par exemple comprendre, en plus du polymère de propylène homophasique et du copolymère d'éthylène hétérophasique, une faible proportion d'un polymère d'éthylène homophasique, typiquement à hauteur de moins de 20% en poids, par exemple entre 0,1 et 10%, en poids par rapport au poids total des polymères de la composition. A noter que, selon d'autres variantes, la composition polymère est sensiblement exempte d'un tel polymère d'éthylène homophasique additionnel (voire totalement exempte de polymère d'éthylène homophasique) avec une teneur en polymère d'éthylène homophasique inférieure à 0,5% en poids par rapport au poids total des polymères de la composition, cette teneur étant de préférence inférieure à 0,1%, voire nulle).

Les travaux effectués par les inventeurs dans le cadre de la présente invention ont maintenant permis de mettre en évidence qu'une couche isolante à base d'une composition copolymère thermoplastique contenant un mélange de polymère de propylène et de copolymère hétérophasique d'éthylène selon les modes de réalisation précités s'avère adapté dans un câble basse tension, y compris pour fonctionner à des températures dépassant 70°C, et que la couche isolante possède des propriétés électriques et thermomécaniques intéressantes, avec en outre de bonnes performances en termes de flexibilité.

Différentes caractéristiques de l'invention et certaines de ses variantes possibles sont décrites plus en détails ci-après.

### LE POLYMERE DE PROPYLENE HOMOPHASIQUE

La composition polymère thermoplastique utile selon l'invention comprend systématiquement un polymère de propylène homophasique.

Au sens de la présente description, on entend par « polymère homophasique », un polymère se présentant sous la forme d'une unique phase, généralement une phase sensiblement homogène. Un tel polymère homophasique au sens de la présente description n'est pas un polymère hétérophasique, ce qui exclue par exemple les copolymères hétérophasiques de propylène du type de ceux décrits dans le document WO2011/092533, à savoir les copolymères Adflex Q200F ou Hifax CA 7441A (LyondellBasell).

Selon un mode de réalisation possible, le polymère de propylène homophasique est un homopolymère de polypropylène.

Alternativement, selon un autre mode envisageable, le polymère de propylène homophasique est un copolymère de propylène.

À titre d'exemples de copolymères de propylène homophasique utilisable selon l'invention, on peut citer les copolymères de propylène et d'une oléfine autre que le propylène, cette oléfine pouvant notamment être choisie parmi l'éthylène ou une oléfine α différente du propylène.

L'oléfine autre que le propylène présente dans un copolymère de propylène homophasique utile selon l'invention représente de préférence au plus 45% en mole, de façon particulièrement préférée au plus 35% en mole, de façon plus particulièrement préférée au plus 20% en mole, et de façon plus particulièrement préférée au plus 10% en mole, par rapport à la quantité totale de monomères dans le copolymère de propylène homophasique. C'est en particulier le cas lorsque l'oléfine autre que le propylène est l'éthylène ou une oléfine α différente du propylène.

Selon un mode intéressant, l'oléfine autre que le propylène présente dans un copolymère de propylène homophasique utile selon l'invention représente au moins 1% en mole environ, par rapport au nombre de moles total de monomères dans le copolymère de propylène homophasique. C'est en particulier le cas lorsque l'oléfine autre que le propylène est l'éthylène ou une oléfine α différente du propylène.

La teneur molaire (pourcentage en en mole) de l'oléfine autre que le propylène présente dans un copolymère de propylène homophasique utile selon l'invention peut notamment être déterminée par résonance magnétique nucléaire (RMN), par exemple selon la méthode décrite dans Masson et al., Int. J. Polymer Analysis & Characterization, 1996, Vol.2, 379-393.

L'oléfine α différente du propylène présente dans un copolymère de propylène homophasique utile selon l'invention peut notamment répondre à la formule CH₂=CH-R¹, dans laquelle R¹ est un groupe alkyle linéaire ou ramifié ayant de 2 à 12 atomes de carbone, notamment choisie parmi les oléfines suivantes : 1-butène, 1-pentène, 4-méthyl-1-pentène, 1-hexène, 1-octène, 1-décène, 1-dodécène, et un de leurs mélanges.

Les copolymères de propylène et d'éthylène sont préférés à titre de copolymères de propylène homophasique.

Le copolymère de propylène homophasique est avantageusement un copolymère statistique.

À titre d'exemple de copolymère statistique homophasique de propylène utile selon l'invention, on peut citer celui commercialisé par la société Borealis sous la référence Bormed^{®} RB 845 MO, celui commercialisé par la société Total Petrochemicals sous la référence PPR 3221, celui commercialisé par la société Sabic sous la référence PP 620P, ou celui commercialisé par la société Repsol Isplen sous la référence RC530S2E.

Le polymère de propylène homophasique utile selon peut être caractérisé par son module élastique. Ce module élastique (ou module d'Young, également désigné par l'anglicisme « *Tensile Modulus* ») est bien connu de l'homme du métier, et peut être facilement déterminé selon la norme ISO 527-1, -2 (2012). La norme ISO 527 présente une première partie, notée « ISO 527-1 », et une deuxième partie, notée « ISO 527-2 » spécifiant les conditions d'essai relatives aux principes généraux de la première partie de la norme ISO 527.

Un homopolymère de propylène homophasique utile selon l'invention a de préférence un module élastique allant de 1250 à 1600 MPa.

Un copolymère de propylène homophasique utile selon l'invention a de préférence un module élastique allant de 600 à 1200 MPa, et de façon particulièrement préférée de 800 à 1100 MPa.

Par ailleurs, un polymère de propylène homophasique utile selon l'invention a avantageusement une température de fusion supérieure à 130°C, de façon particulièrement préférée supérieure à 135°C, et de façon plus particulièrement préférée allant de 140 à 175°C environ.

Un polymère de propylène homophasique utile selon l'invention peut par ailleurs avoir une enthalpie de fusion allant de 20 à 100 J/g environ. Lorsqu'il s'agit d'un homopolymère de propylène homophasique son enthalpie de fusion va de préférence de 80 à 90 J/g. Lorsqu'il s'agit d'un copolymère de propylène homophasique a de préférence une enthalpie de fusion allant de 40 à 90 J/g et de façon particulièrement préférée de 50 à 85 J/g.

Un polymère de propylène homophasique utile selon l'invention peut par ailleurs avoir un indice de fluidité allant de 0,5 à 3,5 g/10 min, de préférence allant de 1,0 à 2,8 g/10 min, et de façon particulièrement préférée allant de 1,2 à 2,5 g/10 min ; notamment déterminé à 230°C environ avec une charge de 2,16 kg environ selon la norme ASTM D1238-00, ou la norme ISO 1133.

Un polymère de propylène homophasique utile selon l'invention peut par ailleurs avoir une densité allant de 0,81 à 0,92 g/cm³ environ, de préférence allant de 0,85 à 0,91 g/cm³, et de façon particulièrement préférée allant de 0,87 à 0,91 g/cm³ ; notamment déterminé selon la norme ISO 1183A (à une température de 23°C).

Le polymère de propylène homophasique peut représenter de 55 à 90% en poids environ, et de façon particulièrement préférée de 60 à 80% en poids environ, par rapport au poids total de polymères dans la composition polymère.

### LE COPOLYMERE D'ETHYLENE HETEROPHASIQUE

La composition polymère à partir de laquelle est formée la couche isolante du câble de l'invention comprend par ailleurs un copolymère d'éthylène de nature hétérophasique. Ce copolymère d'éthylène, dit « hétérophasique » (ou également « hétérophasé »), comprend deux phases distinctes, avec typiquement :
- une phase continue thermoplastique à base d'éthylène (il s'agit d'une matrice thermoplastique à base d'au moins un homo- ou co-polymère de propylène) ; et
- une phase élastomère (généralement à la fois élastomère et thermoplastique) dispersée dans cette phase (matrice) continue thermoplastique.

Ce copolymère hétérophasique peut être introduit dans la composition à l'état d'un mélange hétérophasique préformé. Dans ce cas, le mélange biphasique préformé est typiquement introduit sous la forme d'un produit commercial biphasique, désigné sous le terme de « copolymère hétérophasique ». Un tel « copolymère hétérophasique » commercial peut comprendre :
- un mélange de plusieurs polymères distincts formant le mélange biphasique recherché (avec typiquement au moins un premier polymère formant la matrice thermoplastique ; et au moins un second polymère différent du premier formant une phase dispersée dans la matrice) ; ou bien
- un unique polymère comprenant plusieurs blocs distincts et formant à lui seul le mélange biphasique recherché (avec typiquement une première partie des blocs des chaînes polymères formant ensemble la matrice thermoplastique), et une autre partie des blocs formant un phase dispersée dans cette matrice. Un tel copolymère hétérophasique commercial peut par exemple être introduit dans une extrudeuse sous la forme de granulés, où chacun des granulés comprend le copolymère commercial formant un mélange hétérophasique.

Alternativement, les deux phases du mélange hétérophasique peuvent se former *in situ* suite au mélange de leurs polymères constitutifs dans les proportions conduisant à la dispersion de la phase élastomère dans la phase continue thermoplastique à base d'éthylène (par exemple en introduisant dans une extrudeuse (i) des granulés comprenant le premier polymère homophasique (ou un mélange homophasique de polymères) constitutif de la phase thermoplastique continue, et (ii) d'autres granulés ne comprenant pas le premier polymère et comprenant un second polymère homophasique (ou un second mélange homophasique de polymères) constitutif de la phase dispersée).

Le copolymère hétérophasique employé selon l'invention comprend au moins deux phases distinctes : l'une comprenant une matrice polymère, et l'autre comprenant typiquement des particules ou nodules dispersé(e)s dans cette matrice polymère. Ce type de polymère peut être facilement identifiable par des techniques bien connues de l'homme du métier, comme par exemple la microscopie électronique à balayage (MEB). Plus particulièrement, avec un grossissement x 10 000, il est classique d'observer lesdites particules ou nodules dispersé(e)s dans ladite matrice polymère, lesdites particules ayant avec une taille moyenne en nombre allant de 200 nm à 10 µm, par exemple entre 500 nm et 2 µm.

La phase thermoplastique constituant la matrice du copolymère d'éthylène hétérophasique représente en général entre 50 et 85% en poids, avantageusement entre 55 et 80 % en poids et par exemple entre 55 et 75% en poids par rapport au poids total du copolymère de propylène hétérophasique.

La phase élastomère thermoplastique du copolymère d'éthylène hétérophasique représente avantageusement au moins 15% en poids, de préférence au moins 20% et par exemple au moins 30% et généralement moins de 50% en poids, par exemple moins de 45% en poids par rapport au poids total du copolymère de propylène hétérophasique.

Selon un mode de réalisation intéressant de l'invention, le copolymère d'éthylène hétérophasique présent dans la composition polymère peut être une polyoléfine élastomère (généralement désignée par POE). Les polyoléfines élastomères sont des polyoléfines à caractère à la fois thermoélastique et élastomère bien connues. Des POE utiles à titre de copolymères d'éthylène hétérophasiques selon l'invention incluent des copolymères comprenant, au sein d'une même chaîne polymère :
- des unités monomères éthylène (conférant au polymère un caractère thermoplastique et induisant la formation de la matrice thermoplastique à base de polyéthylène) ; et
- des unité monomères autres que des unités éthylène (induisant la formation d'une phase dispersées élastomère dans la matrice thermoplastique à base de polyéthylène).

A titre de polyoléfines élastomères utiles selon l'invention, on peut notamment citer les terpolymères éthylène propylène diènes (dits EPDM) commercialisés par la société DOW sous le nom commercial NORDEL^{®}, parmi lesquels on peut notamment citer les terpolymères NORDEL^{®} 3722P, NORDEL^{®}4770, NORDEL^{®} 3745P ou NORDEL^{®} IP 4570.

### LES COPOLYMERES D'ETHYLENE ET DE BUTENE

Le copolymère de propylène hétérophasique employé selon l'invention a de préférence un module élastique allant de 50 à 1200 MPa, par exemple de 50 à 550 MPa environ, et de façon plus particulièrement préférée de 50 à 300 MPa environ.

Le polymère d'éthylène hétérophasique employé selon l'invention a de préférence une température de fusion supérieure à 140°C, de façon particulièrement préférée supérieure à 145°C, et de façon plus particulièrement préférée allant de 150 à 175°C environ.

Le polymère d'éthylène hétérophasique selon le premier mode décrit ci-dessus peut avoir une enthalpie de fusion allant de 20 à 100 J/g environ, et de préférence de 20 à 50 J/g environ.

Le polymère d'éthylène hétérophasique selon le premier mode décrit ci-dessus peut avoir un indice de fluidité allant de 0,5 à 5 g/10 min, et de préférence allant de 0,6 à 2 g/10 min environ ; notamment déterminé à 230°C environ avec une charge de 2,16 kg environ selon la norme ASTM D1238-00, ou la norme ISO 1133.

Le polymère d'éthylène hétérophasique peut avoir une densité allant de 0,81 à 0,92 g/cm³ environ, de préférence allant de 0,85 à 0,91 g/cm³, et de façon particulièrement préférée allant de 0,87 à 0,91 g/cm³ ; notamment déterminé selon la norme ISO 1183A (à une température de 23°C).

### Le polymère d'éthylène homophasique additionnel (optionnel)

La composition polymère utile selon l'invention peut éventuellement résulter d'un mélange d'au moins un polymère de propylène homophasique ; d'au moins un copolymère d'éthylène hétérophasique ; et d'un polymère d'éthylène homophasique additionnel présent en faible proportion, typiquement à hauteur de moins de 20% en poids par rapport au poids total des polymères de la composition.

Ce polymère d'éthylène homophasique additionnel, lorsqu'il est présent dans la composition, est typiquement un homopolymère ou un copolymère d'éthylène. Il comprend de préférence au moins 80% en mole environ d'éthylène, de façon particulièrement préférée au moins 90% en mole environ d'éthylène, et de façon plus particulièrement préférée au moins 95% en mole environ d'éthylène, par rapport au nombre de moles total de monomères dans le polymère d'éthylène.

Lorsqu'un tel polymère d'éthylène homophasique additionnel est présent, il a typiquement un module élastique d'au moins 300 MPa, de préférence un module élastique d'au moins 325 MPa, et de façon particulièrement préférée d'au moins 350 MPa. Ce module élastique reste en général inférieur ou égal à 600 MPa, par exemple inférieur ou égal à 500 MPa.

Lorsqu'un polymère d'éthylène homophasique est présent dans la composition, son indice de fluidité va avantageusement de 0,5 à 5 g/10 min, et de préférence de 1 à 3 g/10 min (l'indice de fluidité auquel il est fait référence ici est celui déterminé à 230°C environ avec une charge de 2,16 kg selon la norme ASTM D1238-00, ou la norme ISO 1133).

Lorsqu'un polymère d'éthylène homophasique est présent dans la composition, il peut par exemple s'agir d'un polyéthylène basse densité, un polyéthylène linéaire basse densité, un polyéthylène moyenne densité, ou un polyéthylène haute densité ; notamment selon la norme ISO 1183A (à une température de 23°C).

Dans la présente description, l'expression « polyéthylène basse densité » désigne un polymère d'éthylène homophasique ayant une densité allant de 0,91 à 0,925 g/cm³ environ, ladite densité étant mesurée selon la norme ISO 1183A (à une température de 23°C).

Dans la présente description, l'expression « polyéthylène moyenne densité » désigne un polymère d'éthylène homophasique ayant une densité allant de 0,926 à 0,940 g/cm³ environ, ladite densité étant mesurée selon la norme ISO 1183A (à une température de 23°C).

Dans la présente description, l'expression « polyéthylène haute densité » désigne un polymère d'éthylène homophasique ayant une densité allant de 0,941 à 0,965 g/cm³, ladite densité étant mesurée selon la norme ISO 1183A (à une température de 23°C).

Lorsqu'un polymère d'éthylène homophasique est présent dans la composition, il peut avantageusement s'agir d'un polyéthylène ayant une densité d'au plus 0,936 g/cm³, de façon particulièrement préférée d'au plus 0,930 g/cm³, et de façon plus particulièrement préférée d'au plus 0,925 g/cm³ ; ladite densité étant notamment mesurée selon la norme ISO 1183A (à une température de 23°C), et le polymère d'éthylène homophasique est alors avantageusement un polyéthylène basse densité, un polyéthylène linéaire basse densité, ou un polyéthylène moyenne densité, et de façon particulièrement préférée un polyéthylène linéaire basse densité.

À titre d'exemple de polyéthylène linéaire basse densité, on peut citer celui commercialisé par la société Exxon sous la référence LL 1004YB, celui commercialisé par la société Sabic sous la référence 318B, ou celui commercialisé par la société Versalis sous la référence Flexirene CL 10.

Le polymère d'éthylène homophasique, lorsqu'il est présent est typiquement présent à une teneur entre 0,1 et 20%, par exemple entre 0,5 et 10% en poids par rapport au poids total des polymères de la composition.

Lorsque la composition comprend un polymère d'éthylène homophasique, elle comprend en général systématiquement aussi un polymère de propylène homophasique, avec une proportion massique (i.e. une quantité en poids) du polymère de propylène homophasique qui reste de préférence strictement supérieure à la proportion massique (i.e. la quantité en poids) du polymère d'éthylène homophasique, par rapport au poids total de polymères dans la composition polymère.

### EVENTUELS AUTRES POLYMERES

La composition polymère à partir de laquelle est formée la couche isolante du câble de l'invention peut éventuellement comprendre d'autres polymères en plus des polymères précités.

Cependant, selon une forme de réalisation préférée de l'invention, la composition polymère comprend moins de 20% (par exemple moins de 15%, voire moins de 10%) en poids de polymère autres qu'un copolymère de propylène hétérophasique, un polymère de propylène homophasique, ou un polymère d'éthylène homophasique par rapport au poids total de polymères dans la composition.

Par ailleurs, la composition polymère à partir de laquelle est formée la couche isolante du câble de l'invention est une composition polymère thermoplastique. Elle n'est donc pas réticulable. La couche isolante du câble de l'invention est elle aussi une couche polymère thermoplastique, qui n'est donc pas réticulée.

En particulier, la composition polymère à partir de laquelle est formée la couche isolante du câble de l'invention ne comprend pas d'agents de réticulation, d'agents de couplage de type silane, de peroxydes et/ou d'additifs qui permettent une réticulation.

Par ailleurs, il est préférable que la composition polymère à partir de laquelle est formée la couche isolante du câble de l'invention ne comprenne pas de polymères d'oléfine greffés avec des fonctions réticulables, tels que par exemple de polymères d'oléfine vinyl silane.

Compte tenu de son caractère thermoplastique, la couche isolante du câble de l'invention présente en général l'avantage d'être recyclable.

### ADDITIFS OPTIONNELS

La composition polymère à partir de laquelle est formée la couche isolante du câble de l'invention peut éventuellement comprendre un ou plusieurs additifs en plus des polymères précités.

Ces additifs peuvent notamment être choisis parmi des agents favorisant la mise en œuvre tels que des lubrifiants, des agents compatibilisants, des agents de couplage, des antioxydants, des agents anti-UV, des antioxydants, des agents anti-cuivre, des agents anti-arborescences d'eau, des pigments, et leurs mélanges.

La composition polymère comprend de préférence au moins un antioxydant et/ou au moins un agent anti-cuivre (également appelé désactivateur de métaux).

La composition polymère peut typiquement comprendre de 0,01 à 5% en poids environ, et de préférence de 0,1 à 2% en poids environ d'additifs, par rapport au poids total de la composition polymère.

Les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le 1,2-bis(3,5-di-tert-butyl-4-hydroxyhydrocinnamoyl) hydrazine (Irganox^{®} MD 1024), le pentaérythritol tétrakis(3-(3,5-di-*tert*-butyl-4-hydroxyphényl)propionate) (Irganox^{®} 1010), l'octadécyl 3-(3,5-di-*tert*-butyl-4-hydroxyphényl)propionate (Irganox^{®} 1076), le 1,3,5-triméthyl-2,4,6-tris(3,5-di-*tert*-butyl-4-hydroxybenzyl)benzène (Irganox^{®} 1330), le 4,6-bis (octylthiométhyl)-o-crésol (Irgastab^{®} KV10 ou Irganox^{®} 1520), le 2,2'-thiobis(6-*tert*-butyl-4-méthylphénol) (Irganox^{®} 1081), le 2,2'- thiodiéthylène bis[3-(3,5-di-*tert*-butyl-4-hydroxyphényl) propionate] (Irganox^{®} 1035), le tris (3,5-di-*tert*-butyl-4-hydroxybenzyl) isocyanurate (Irganox^{®} 3114), le 2,2'-oxamidobis(éthyl-3(3,5-di-*tert*-butyl-4-hydroxyphényle)propionate) (Naugard XL-1), ou le 2,2'-méthylènebis(6-*tert*-butyl-4-méthylphénol).

À titre d'exemples d'antioxydants à base de soufre, on peut citer les thioéthers tels que le didodécyl-3,3'-thiodipropionate (Irganox^{®} PS800), le distéaryl thiodipropionate ou dioctadecyl-3,3'-thiodipropionate (Irganox^{®} PS802), le bis [2-méthyle-4-{3-n-alkyle (C₁₂ ou C₁₄) thiopropionyloxy}-5-*tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox^{®} 1520 ou Irgastab^{®} KV10).

À titre d'exemples d'antioxydants à base de phosphore, on peut citer le tris(2,4-di-*tert*-butyl-phényle) phosphite (Irgafos^{®} 168) ou le bis(2,4-di-*tert-*butylphényl)pentaérythritol diphosphite (Ultranox^{®} 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl) -N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

Le désactivateur de métal peut être choisi parmi les hétérocycles aromatiques azotés, et les composés aromatiques comprenant au moins une fonction -NH-C(=O)-, et de préférence parmi les composés aromatiques comprenant au moins une fonction -NH-C(=O)-. La présence de l'oxygène dans le désactivateur de métal est importante pour pouvoir immobiliser durablement les ions métalliques.

Le désactivateur de métal est de préférence différent d'une amine encombrée. En d'autres termes, le désactivateur de métal ne comprend pas de préférence un ou plusieurs groupements tétraméthylpipéridine.

À titre d'exemples d'hétérocycliques aromatiques azotés, on peut citer les dérivés de la quinoline tels que les 2,2,4-triméthyl-1,2 dihydroquinolines polymérisées (TMQ).

À titre d'exemples de composés aromatiques comprenant au moins une fonction -NH-C(=O)-, on peut citer ceux comprenant deux fonctions -NH-C(=O)-, de préférence comprenant deux fonctions -NH-C(=O)- liées de façon covalente, et de façon plus particulièrement préférée comprenant un groupe divalent -NH-C(=O)-C(=O)-NH- ou -C(=O)-NH-NH-C(=O)-, tels que le 2,2' oxamidobis-[éthyl-3-(3,5-di-tert-butyl-4-hydroxyphényl) propionate] (Naugard XL-1), le 2',3-bis[[3-[3,5-di-tert-butyl-4-hydroxy phenyl]propionyl]] propionohydrazide ou 1,2-bis(3,5-di-tert-butyl-4-hydroxyhydrocinnamoyl) hydrazine (Irganox^{®} 1024 ou Irganox^{®} MD 1024), ou l'oxalyl bis(benzylidenehydrazide) (OABH).

Certains désactivateurs de métaux sont également des antioxydants.

En particulier lorsque la couche isolante du câble de l'invention est destinée à une application basse tension, il est préférable que la composition polymère à partir de laquelle est formée la couche isolante soit exempte de liquide diélectrique, notamment de liquides choisis parmi une huile minérale (e.g. huile naphténique, huile paraffinique ou huile aromatique), une huile végétale (e.g. huile de soja, huile de lin, huile de colza, huile de maïs ou huile de ricin), une huile synthétique telle qu'un hydrocarbure aromatique (alkylbenzène, alkylnaphtalène, alkylbiphényle, alkydiaryléthylène, par exemple), une huile de silicone, un éther-oxyde, un ester organique, et un hydrocarbure aliphatique.

### LA COUCHE ELECTRIQUEMENT ISOLANTE

La couche électriquement isolante du câble de l'invention, obtenue à partir de la composition polymère défini dans les paragraphes précédents, est une couche thermoplastique et non réticulée.

Au sens de la présente description, l'expression « couche non réticulée » désigne une couche dont le taux de gel selon la norme ASTM D2765-01 (extraction au xylène) est de préférence d'au plus 30% environ, de préférence d'au plus 20% environ, de façon particulièrement préférée d'au plus 10% environ, de façon plus particulièrement préférence d'au plus 5%, et de façon encore plus particulièrement préférée de 0%.

La couche électriquement isolante du câble de l'invention, de préférence non réticulée, présente une résistance à la traction (RT) d'au moins 8,5 MPa, de préférence d'au moins 10 MPa environ, et de façon particulièrement préférée d'au moins 15 MPa environ, avant vieillissement (selon la norme CEI 20-86).

Selon un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, avant vieillissement (selon la norme CEI 20-86).

Dans un mode de réalisation particulier, la couche électriquement isolante, de préférence non réticulée, présente une résistance à la traction (RT) d'au moins 8,5 MPa, de préférence d'au moins 10 MPa environ, et de façon particulièrement préférée d'au moins 15 MPa environ, après vieillissement (selon la norme CEI 20-86.

Dans un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, après vieillissement (selon la norme CEI 20-86).

La résistance à la traction (RT) et l'élongation à la rupture (ER) (avant ou après vieillissement) peuvent être effectués selon la Norme NF EN 60811-1-1, notamment à l'aide d'un appareil commercialisé sous la référence 3345 par la société Instron.

Le vieillissement est généralement effectué à 135°C pendant 240 heures (ou 10 jours).

La couche électriquement isolante du câble de l'invention est de préférence une couche recyclable.

La couche électriquement isolante de l'invention peut être une couche extrudée, notamment par des procédés bien connus de l'homme du métier.

La couche électriquement isolante présente une épaisseur variable en fonction du type de câble envisagé. En particulier, lorsque le câble conforme à l'invention est un câble à basse tension, l'épaisseur de la couche électriquement isolante est généralement de 1 à 2 mm environ. Les épaisseurs précitées dépendent de la taille de l'élément électriquement conducteur allongé.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m, mesurée à 25°C environ en courant continu.

La couche électriquement isolante de l'invention peut comprendre au moins le polymère de propylène homophasique, au moins le polymère d'éthylène homophasique, éventuellement le polymère de propylène hétérophasique, et éventuellement le liquide diélectrique, les ingrédients précités étant tels que définis dans l'invention.

Les proportions des différents ingrédients dans la couche électriquement isolante peuvent être identiques à celles telles que décrites dans l'invention pour ces mêmes ingrédients dans la composition polymère.

Le câble de l'invention concerne plus particulièrement le domaine des câbles électriques fonctionnant en courant continu (DC) ou en courant alternatif (AC).

### LE CABLE EMPLOYANT LA COUCHE ISOLANTE DE L'INVENTION

De préférence, la couche électriquement isolante de l'invention, obtenue à partir de la composition polymère défini dans les paragraphes précédents, entoure l'élément électriquement conducteur allongé.

L'élément électriquement conducteur allongé est typiquement positionné au centre du câble.

L'élément électriquement conducteur allongé peut être un conducteur monocorps comme par exemple un fil métallique ou un conducteur multicorps tel qu'une pluralité de fils métalliques torsadés (toronés entre eux) ou non.

L'élément électriquement conducteur allongé peut notamment être en aluminium, en alliage d'aluminium, en cuivre, en alliage de cuivre, ou en une de leurs combinaisons.

Le câble peut comprendre en outre une gaine extérieure de protection entourant la couche électriquement isolante.

La gaine extérieure de protection peut être en contact physique direct avec la couche électriquement isolante.

La gaine extérieure de protection peut être une gaine électriquement isolante.

Selon une forme de réalisation particulièrement préférée de l'invention, la couche électriquement isolante est directement en contact physique avec l'élément électriquement conducteur allongé.

De manière avantageuse, le câble de l'invention est un câble basse tension. Un câble selon l'invention ne comprend pas, en général de couche semiconductrice.

### BREVE DESCRIPTION DES DESSINS

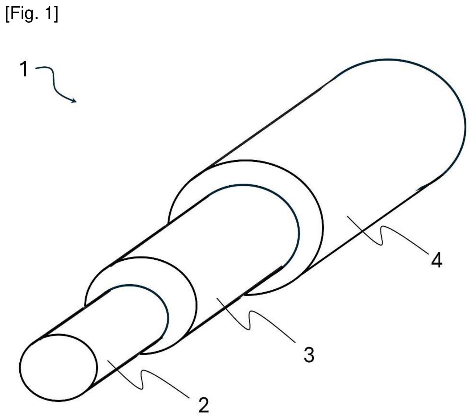

[Fig. 1] La figure 1 représente un câble conforme à l'invention.

Pour des raisons de clarté, seuls les éléments essentiels pour la compréhension de l'invention ont été représentés sur la figure, et ce de manière schématique et sans respect de l'échelle.

La Figure 1 représente un câble électrique 1 à basse tension conforme à l'invention, qui comprend un élément électriquement conducteur 2 allongé central (cet élément électriquement conducteur 2 peut notamment être en cuivre ; ou en aluminium ; ou en un de leurs alliages). Le câble électrique 1 comprend en outre une couche 3 électriquement isolante, et éventuellement une gaine extérieure de protection 4.

La couche électriquement isolante 3 est une couche extrudée non réticulée, obtenue à partir d'une composition polymère selon l'invention.

La présence de la gaine extérieure de protection 4 est préférentielle, mais non essentielle selon l'invention.

## Revendications

1. Câble électrique (1) comprenant au moins une couche électriquement isolante (3) entourant au moins un élément électriquement conducteur allongé (2), où ladite couche isolante (3) est obtenue à partir d'une composition polymère thermoplastique comprenant :
- un polymère de propylène homophasique ; et
- un copolymère d'éthylène hétérophasique, présent à hauteur de moins de 40% en poids par rapport au poids total de polymères dans la composition polymère thermoplastique.

2. Câble électrique selon la revendication 1, où, la couche isolante (3) est obtenue à partir d'une composition polymère thermoplastique comprenant entre 15 et 35% de copolymère d'éthylène hétérophasique par rapport au poids total de polymères dans la composition polymère thermoplastique.

3. Câble électrique selon la revendication 1 ou 2, où, la couche isolante (3) est obtenue à partir d'une composition polymère thermoplastique comprenant le polypropylène homophasique à une teneur de 50 à 95% en poids par rapport à la masse totale des polymères de la composition.

4. Câble électrique selon l'une des revendications 1 à 3, où la couche isolante (3) est obtenue à partir d'une composition polymère thermoplastique où la teneur totale en polymère de propylène homophasique et copolymère hétérophasique d'éthylène est d'au moins 90% en poids par rapport au poids total de polymères dans la composition polymère thermoplastique.

5. Câble électrique selon l'une des revendications 1 à 3, où la couche isolante (3) est obtenue à partir d'une composition polymère comprenant en outre un polymère d'éthylène homophasique, de préférence à hauteur de moins de moins de 20% en par rapport au poids total de polymères dans la composition polymère thermoplastique.

6. Câble électrique (1) selon l'une des revendications 1 à 5 où le copolymère d'éthylène hétérophasique présent dans la composition polymère est une polyoléfine élastomère (POE).

7. Câble électrique (1) selon la revendication 6, où le copolymère d'éthylène hétérophasique présent dans la composition polymère est un terpolymère éthylène propylène diène (EPDM).

8. Câble électrique selon l'une quelconque des revendications 1 à 7, où la couche électriquement isolante est une couche non réticulée.

9. Câble électrique selon l'une quelconque des revendications 1 à 8, où la couche électriquement isolante est directement en contact physique avec l'élément électriquement conducteur allongé.

10. Câble électrique selon l'une quelconque des revendications 1 à 9, qui comprend en outre une gaine extérieure de protection (4) entourant la couche électriquement isolante.

11. Procédé d'application d'une couche de revêtement thermoplastique autour d'au moins un élément électriquement conducteur allongé d'un câble, ledit procédé comprenant l'application, notamment par extrusion, d'une composition polymère comprenant (i) un polymère de propylène homophasique et (ii) un copolymère hétérophasique d'éthylène présent à hauteur de moins de 40% en poids par rapport au poids total de polymères dans la composition polymère thermoplastique.
